# EUROPÄISCHE PATENTSCHRIFT

(11) **EP 1 481 620 B1**
(45) Veröffentlichungstag und Bekanntmachung des Hinweises auf die Patenterteilung: **11.05.2005**
(21) Anmeldenummer: 04006299.4
(22) Anmeldetag: 17.03.2004
(51) Int. Cl.: A47G 23/16

(54) **Gefäss mit einer Einrichtung zur Anzeige einer Gesamtfüllmenge**
Container with a device for indicating the filling quantity
Récipient muni d'un dispositif pour indiquer une quantité de remplissage

(30) Priorität: 25.05.2003 DE 10323996
(43) Veröffentlichungstag der Anmeldung: 01.12.2004
(73) Patentinhaber: Bucksch, Helmut, 65812 Bad Soden/Ts. (DE)
(72) Erfinder: Bucksch, Helmut, 65812 Bad Soden/Ts. (DE)

(56) Entgegenhaltungen:
- WO-A-01/30210
- DE-A- 10 136 236
- DE-A- 19 951 466
- DE-U- 29 702 741
- US-A- 5 896 990

## Beschreibung

Die Erfindung betrifft ein Gefäß mit einer Einrichtung zur Anzeige einer Gesamtfüllmenge, die größer sein kann als das Fassungsvermögen des Gefäßes, bei dem die Einrichtung ein Skalenelement mit einer Gesamtfüllmengenskala und ein Markierungselement aufweist, die relativ zueinander einstellbar sind.

Aus der WO 01/30210 A1 sind Trinkgefäße bekannt, die eine Füllmengenskala und eine Einrichtung zur Anzeige einer Gesamttrinkmenge besitzen. Diese Einrichtung weist ein um das Trinkgefäß drehbares Element auf, das auf das Trinkgefäß aufsteckbar und auch wieder abnehmbar ist. Die dafür erforderlichen mechanischen Ausführungen und Klemmvorrichtungen sind aufwendig und schwer herzustellen.

Aus der DE 101 36 236 A1 ist eine an Trinkgefäßen anbringbare Vorrichtung bekannt, die ein elastisches bogenförmiges Element aufweist, auf dem eine Skala für eine Gesamttrinkmenge angebracht ist, und ein längs der Skala verschiebbares Markierungselement. Dieses ist mittels Federzungen mit dem elastischen bogenförmigen Element verbunden, was aufwendig und schwer herzustellen ist.

Bei den bekannten Trinkgefäßen dieser Art sind die drehbaren oder verschiebbaren Elemente zur Einstellung der Gesamttrinkmenge mechanisch mit dem jeweiligen Trinkgefäß lösbar verbunden mittels komplizierter und kostspieliger mechanischer Federverrastungen oder Klemmechanismen.

Es ist die Aufgabe der vorliegenden Erfindung ein Gefäß mit einer leichter herstellbaren Einrichtung zur Anzeige einer Gesamtfüllmenge anzugeben.

Diese Aufgabe wird dadurch gelöst, daß ein erfindungsgemäßes Gefäß ein Skalenelement und ein Markierungselement aufweist, die durch Magnetkraft lösbar miteinander verbunden sind. Um dies zu erreichen, ist gemäß einer bevorzugten Ausführung entweder das Skalenelement oder das Markierungselement mit einem Magneten versehen oder besteht aus einem Magneten, vorzugsweise einem Dauermagneten. Das andere Element ist dann mit magnetischem Material versehen oder besteht aus magnetischem Material. Unter magnetischem Material soll in dieser Anmeldung ein Material verstanden werden, das zwar von einem Magneten angezogen wird, aber sonst selbst keinen Magneten darstellt, beispielsweise weichmagnetische oder paramagnetische Materialien. Es können aber auch beide Elemente mit mindestens einem Magneten geeigneter Polarität versehen sein oder aus Magneten geeigneter Polarität bestehen, vorzugsweise Dauermagneten.

Ein geeigneter Magnet kann aus bekannten Magnetwerkstoffen wie beispielsweise Samarium-Cobalt, Neodym-Eisen-Bor oder aus einem keramischen Werkstoff, insbesondere Hartferrit gefertigt sein, der gegen viele Chemikalien, Lösungsmittel, schwache Säuren usw. beständig ist. Der Magnet kann als Scheibenmagnet, Ringmagnet oder in anderer Form ausgeführt sein, und kann auch aus mehreren Einzelmagneten zusammengesetzt sein.

Bei einem ersten erfindungsgemäßen Gefäß besteht das Skalenelement aus einem am Gefäß drehbar befestigten Element, auf dem eine Gesamtfüllmengenskala angebracht ist. Auf dem Gefäß ist eine Markierung angebracht. Somit bildet gewissermaßen das Gefäß ein Markierungselement. Natürlich kann auch am drehbaren Element die Markierung angebracht sein, die gegenüber einer am Gefäß angebrachten Gesamtfüllmengenskala verdrehbar ist. In diesem Fall bildet das drehbare Element das Markierungselement und das Gefäß das Skalenelement. Erfindungsgemäß sind das Skalenelement und das Markierungselement durch Magnetkraft miteinander lösbar verbunden.

Vorzugsweise am Fuß des Gefäßes ist eine Eisenrückschlußscheibe als Magnetanker angebracht. Die Eisenrückschlußscheibe kann auch in den Fuß des Gefäßes eingegossen sein. Das drehbare Element, z.B. ein von unten auf den Fuß des Gefäßes aufsteckbarer Ring oder eine Kappe, ist dann mit einem Dauermagneten versehen, der als Haftmagnet wirkt. Dieser Magnet bildet zusammen mit der Eisenrückschlußscheibe ein Haftmagnet-System, das ausreichende Haftkräfte aufweist, um das drehbare Element fest am Gefäß zu halten. Umgekehrt kann natürlich auch am Gefäß ein Dauermagnet angebracht oder eingegossen sein, und das drehbare Element die Eisenrückschlußscheibe aufnehmen oder aus einem magnetischen Material bestehen. Wird die Haftkraft des Magnetsystems überschritten, z.B. beim Abnehmen des drehbaren Elements, reißt die Verbindung störungsfrei ab. Mit diesem Magnetsystem können also schnell und sicher lösbare Verbindungen gebildet werden. Auch kann der Magnet genau in der Form des drehbaren Elements gefertigt werden, und beispielsweise eine Kunststoffummantelung aufweisen, auf der die Gesamtfüllmengenskala oder die Markierung angebracht ist.

Um die Haftkraft des Magnetsystems zu erhöhen, kann der Magnet mit einer zweiten Eisenrückschlußscheibe versehen sein, sodaß der Magnet zwischen den beiden Eisenrückschlußscheiben liegt, wenn das drehbare Element aufs Gefäß aufgesteckt ist. Bei einer bevorzugten Ausführung eines erfindungsgemäßen Gefäßes besteht das drehbare Element aus Kunststoff, in den mehrere Einzelmagnete und die zweite Eisenrückschlußscheibe eingebettet sind.

Durch geeignete Wahl eines gummi- oder kautschukartigen weichen Kunststoffs und der Anzahl und Stärke der Einzelmagnete kann der Reibungskoeffizient zwischen den Reibflächen des Skalen- bzw. des Markierungselements festgelegt und dadurch der gewünschte Drehwiderstand erzeugt werden. Die Reibflächen können mit leichten Verzahnungen, Riffelungen oder Vertiefungen und Nocken versehen sein, sodaß sich das drehbare Element schrittweise drehen läßt, wobei die Schrittweite vorzugsweise an die Skaleneinteilung der Gesamtfüllmengenskala angepaßt ist.

Das Gefäß kann aus Glas, Kunststoff oder einem anderen geeigneten Material hergestellt werden. Der Boden des Gefäßes ist so ausgebildet, daß die Reibflächen des Skalen- bzw. des Markierungselements ohne Luftspalt aufeinanderliegen. Wenn der Boden eines Glasgefäßes, das relativ große Fertigungstoleranzen aufweist, beispielsweise einen äußeren ringförmigen Wulst aufweist, so ist das drehbare Element mit einer entsprechenden ringförmigen Vertiefung versehen, die den Wulst aufnehmen kann, d.h. das Skalenelement und das zugehörige Markierungselement sind mit aufeinander abgestimmten Profilen versehen.

Durch Drehen des drehbaren Elements läßt sich auf Höhe der Markierung die jeweilige zuvor an einer am Gefäß angebrachten Füllmengenskala abgelesene Füllmenge einstellen, und nach jedem Entleeren und Neubefüllen des Gefäßes durch entsprechendes Weiterdrehen die Gesamtfüllmenge aufaddieren. Wenn das Gefäß keine Füllmengenskala aufweist, kann durch Weiterdrehen beispielsweise die Anzahl der gefüllten Gefäße aufaddiert werden. Bei der Zubereitung von beispielsweise Cocktails oder Salatdressings mit mehreren Zutaten wird mit dem drehbaren Element jeweils die Menge der Zutat eingestellt und auf Höhe der Markierung läßt sich dann die jeweilige Gesamtmenge ablesen, bis zu der das Gefäß an der Füllmengenskala aufzufüllen ist. Bei abgenommenem drehbarem Element läßt sich das Gefäß wie gewohnt reinigen, insbesondere auch an den Stellen, die sonst durch das drehbare Element verdeckt sind.

Bei einem zweiten erfindungsgemäßen Gefäß besteht das Skalenelement aus einem elastischen bogenförmigen Element, auf dem eine Gesamtfüllmengenskala angebracht ist, und das einen Kern aus Federdraht oder Federstahl aufweist, und daher aufgrund seiner Federelastizität am Gefäß festgeklemmt werden kann. Längs der Gesamtfüllmengenskala ist ein Reiter verschiebbar angeordnet, der als Markierungselement dient, wie aus der DE 101 36 236 A1 bekannt ist. Erfindungsgemäß sind das Skalenelement und das Markierungselement durch Magnetkraft miteinander lösbar verbunden.

Bei einem dritten erfindungsgemäßen Gefäß ist am Gefäß ein Skalenelement in Form eines vorzugsweise selbstklebenden und biegsamen Magnetbands oder -folie angebracht, das mit einer Gesamtfüllmengenskala versehen, vorzugsweise bedruckt ist, wobei die anzeigbare Gesamtfüllmenge größer sein kann als das Fassungsvermögen des Gefäßes. Für das Magnetband kann auch ein selbstklebendes flexibles Stahlband als Haftfläche dienen, auf das das Magnetband aufgebracht ist, um die Haftkraft zu erhöhen. Das Gefäß weist ferner ein Markierungselement auf, das auf das Skalenelement insbesondere technisch und formmäßig abgestimmt ist, und aus einem magnetischen Material besteht, aber auch mit einem Magneten versehen oder als Magnet ausgebildet sein kann. Das Markierungselement haftet magnetisch am Skalenelement, ist jedoch längs der Gesamtfüllmengenskala verschiebbar zur jeweiligen Einstellung der Gesamtfüllmenge. Das Skalenelement und das Markierungselement können mit einem Nut und Feder Profil versehen sein. Die Profilierung sorgt für eine bessere Haftung des Markierungselements und gleichzeitig für eine Führung entlang der Gesamtfüllmengenskala. Natürlich kann das Skalenelement auch nicht dauermagnetisch sein. In diesem Fall ist das Markierungselement mit einem Magneten versehen oder als Magnet ausgebildet, damit es am Skalenelement magnetisch haften kann. Wenn das Gefäß mit einer Füllmengenskala versehen ist, läßt sich durch Verschieben des Markierungselements längs der Gesamtfüllmengenskala die jeweilige zuvor auf der Füllmengenskala abgelesene Füllmenge einstellen, und nach jedem Entleeren und Neubefüllen des Gefäßes durch entsprechendes Weiterschieben die Gesamtfüllmenge aufaddieren. Wenn das Gefäß keine Füllmengenskala aufweist, kann durch Weiterschieben beispielsweise die Anzahl der gefüllten Gefäße aufaddiert werden.

Erfindungsgemäße Gefäße können auch beispielsweise den aus der WO 01/30210 A1 bekannten Aufbau besitzen, bei dem das Skalenelement und das Markierungselement lösbar mechanisch miteinander verbunden sind. Zu diesem Zweck weist das Skalenelement beispielsweise einen Wulst auf, und das Markierungselement eine Rille oder umgekehrt, derart, daß der Wulst in die Rille einschnappen kann. Zusätzlich sind diese Elemente erfindungsgemäß auch noch magnetisch miteinander verbunden. Auf diese Weise läßt sich eine gewisse Schwergängigkeit beim Verstellen der Elemente zueinander erreichen, sodaß diese nicht so leicht unbeabsichtigt gegeneinander verrutschen können. Durch eine geeignete Anzahl und/oder Stärke der Magnete läßt sich die gewünschte Schwergängigkeit einstellen.

Die Erfindung wird nachstehend anhand zweier Ausführungsbeispiele erläutert, die in den beiden Figuren dargestellt sind.

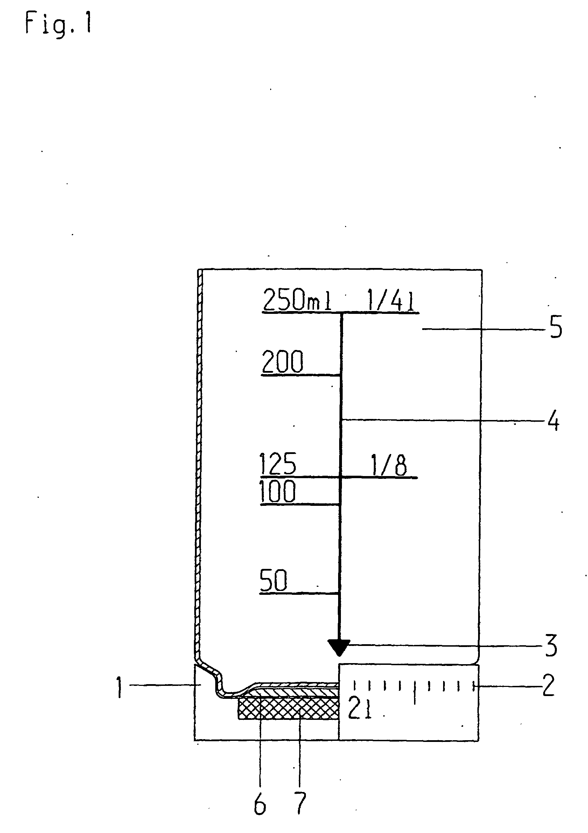

Fig. 1 zeigt schematisch ein Trink- und/oder Mischgefäß 5 mit einer Füllmengenskala 4, einer Markierung 3 und einer am Mischgefäß 5 befestigten Eisenrückschlußscheibe 6. Ein drehbares Element 1 mit einer Gesamtfüllmengenskala 2 und einem am drehbaren Element 1 befestigten Dauermagnet 7 ist von unten auf das Mischgefäß 5 aufgesteckt, und bildet zusammen mit der Markierung 3 eine Einrichtung zur Anzeige einer Gesamtfüllmenge, die größer sein kann als das Fassungsvermögen des Mischgefäßes. Infolge der dauernden Haftkräfte des Magneten ergibt sich ein ständiger Druck, der ein unbeabsichtigtes Verstellen des drehbaren Elements 1 gegenüber der Markierung 3 verhindert. Die Haftkraft des Magneten 7 kann durch eine geeignete Anzahl und/oder Stärke von ggfs. mehreren Einzelmagneten so dosiert werden, daß sich das drehbare Element 1 leicht aufs Mischgefäß 5 aufstecken und auch wieder leicht abnehmen läßt. Der Dauermagnet 7 und die Eisenrückschlußscheibe 6 können wasserunempfindlich ausgeführt werden. Das Mischgefäß 5 besteht vorzugsweise aus Glas oder einem transparentem Kunststoff. Das drehbare Element 1 ist als Kappe ausgebildet und besteht aus einem geeigneten Kunststoff oder aus Edelstahl.

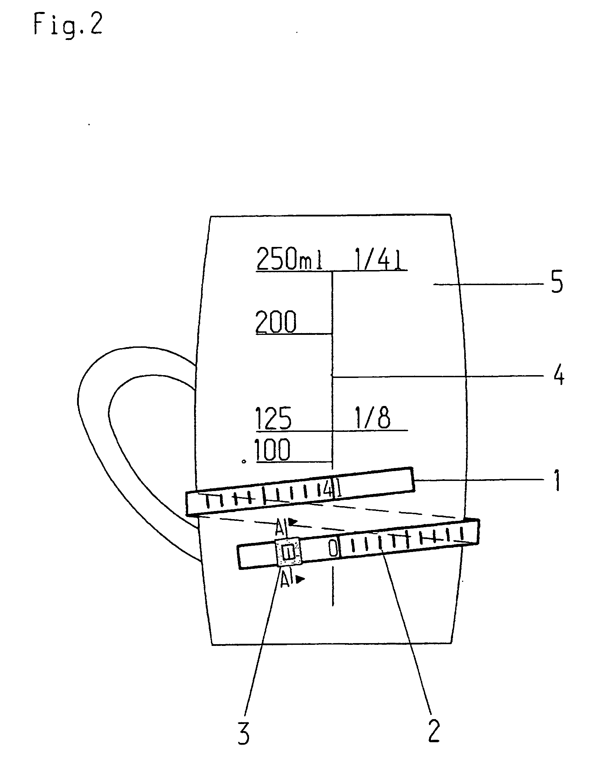

Das in Fig. 2 dargestellte Trinkgefäß 5 weist eine Füllmengenskala 4 und eine Vorrichtung zur Anzeige einer Gesamttrinkmenge auf. Die Vorrichtung besteht aus einem Markierungselement 3 und einem Skalenelement 1 in Gestalt eines elastischen bogenförmigen Elements mit einen Kern aus magnetischem Federdraht bzw. Federstahl, das aufgrund seiner Elastizität aufs Trinkgefäß 5 klemmend aufsteckbar ist. Das Markierungselement 3 ist am Skalenelement 1 befestigbar und erfindungsgemäß mit einem Magneten versehen oder als Magnet ausgebildet, sodaß das Markierungselement 3 durch magnetische Kräfte am Skalenelement 1 haftet, jedoch trotzdem längs einer am Skalenelement 1 angebrachten Gesamttrinkmengenskala 2 verschiebbar ist.

## Patentansprüche

1. Gefäß (5) mit einer Einrichtung zur Anzeige einer Gesamtfüllmenge, die größer sein kann als das Fassungsvermögen des Gefäßes, bei dem die Einrichtung ein Skalenelement (1) mit einer Gesamtfüllmengenskala (2) und ein Markierungselement (3) aufweist, die relativ zueinander einstellbar sind,
**dadurch gekennzeichnet,**
**daß** das Skalenelement (1) und das Markierungselement (3) durch Magnetkraft miteinander lösbar verbunden sind.

2. Gefäß nach Anspruch 1, **dadurch gekennzeichnet,**
**daß** das Skalenelement (1) ein um das Gefäß (5) drehbares Element ist, daß das Gefäß als Markierungselement dient und mit einer Markierung (3) versehen ist, und daß das Skalenelement (1) magnetisch mit dem Gefäß (5) verbunden ist.

3. Gefäß nach Anspruch 1, **dadurch gekennzeichnet,**
**daß** das Markierungselement (3) ein um das Gefäß (5) drehbares Element ist, daß das Gefäß als Skalenelement dient und mit einer Gesamtfüllmengenskala (2) versehen ist, und daß das Markierungselement (3) magnetisch mit dem Gefäß (5) verbunden ist.

4. Gefäß nach Anspruch 2 oder 3,
**dadurch gekennzeichnet,**
**daß** das Gefäß (5) und das drehbare Element mit je einem Magneten geeigneter Polarität versehen sind, oder daß das Gefäß (5) mit einem Magneten versehen ist und das drehbare Element aus magnetischem Material besteht oder mit magnetischem Material versehen ist, oder daß das Gefäß (5) mit magnetischem Material versehen ist und das drehbare Element mit einem Magneten versehen ist oder aus einem Magneten besteht.

5. Gefäß nach Anspruch 1, **dadurch gekennzeichnet,**
**daß** das Skalenelement (1) ein auf dem Gefäß (5) festklemmbares elastisches Element ist, und daß das Markierungselement (3) längs des Skalenelements (1) verschiebbar ist.

6. Gefäß nach Anspruch 1, **dadurch gekennzeichnet,**
**daß** das Skalenelement ein auf dem Gefäß aufgeklebtes Metallband oder -folie aufweist, das mit einer Gesamtfüllmengenskala versehen ist, und daß das Markierungselement aus einem Magneten besteht oder mit einem Magneten versehen ist.

7. Gefäß nach Anspruch 1, **dadurch gekennzeichnet,**
**daß** das Skalenelement ein auf dem Gefäß aufgeklebtes Magnetband oder -folie aufweist, das mit einer Gesamtfüllmengenskala versehen ist, und daß das Markierungselement aus magnetischem Material oder einem Magneten besteht oder mit magnetischem Material oder einem Magneten versehen ist.

8. Gefäß nach einem der vorhergehenden Ansprüche,
**dadurch gekennzeichnet,**
**daß** das Skalenelement oder das Markierungselement aus einem Kunststoff besteht, und daß mindestens ein Magnet vom Kunststoff umgeben ist.

9. Gefäß nach einem der vorhergehenden Ansprüche,
**dadurch gekennzeichnet,**
**daß** das Skalenelement und/oder Markierungselement mit einer Eisenrückschlußscheibe versehen ist.

10. Gefäß nach Anspruch 9,
**dadurch gekennzeichnet,**
**daß** das Skalenelement oder das Markierungselement aus einem Kunststoff besteht, und daß die Eisenrückschlußscheibe vom Kunststoff umgeben ist.

11. Gefäß nach einem der vorhergehenden Ansprüche,
**dadurch gekennzeichnet,**
**daß** das Skalenelement (1) und das zugehörige Markierungselement (3) mit aufeinander abgestimmten Profilen versehen sind.

12. Gefäß nach einem der vorhergehenden Ansprüche,
**dadurch gekennzeichnet,**
**daß** das Skalenelement (1) und das Markierungselement (3) lösbar mechanisch miteinander verbunden sind.

13. Gefäß nach einem der vorhergehenden Ansprüche,
**dadurch gekennzeichnet,**
**daß** das Skalenelement (1) einen Wulst aufweist, und das Markierungselement (3) eine Rille oder umgekehrt, derart, daß der Wulst in die Rille einschnappen kann.

14. Gefäß nach einem der vorhergehenden Ansprüche,
**dadurch gekennzeichnet,**
**daß** die Reibfläche zwischen dem Skalenelement (1) und dem Markierungselement (3) derart ausgebildet ist, daß sie schrittweise relativ zueinander einstellbar sind.

15. Gefäß nach einem der vorhergehenden Ansprüche,
**dadurch gekennzeichnet,**
**daß** das Gefäß eine Füllmengenskala (4) aufweist.

## Claims

1. Container (5) with a device for indicating a filling quantity, which can be greater than the holding capacity of the container, in which the device has a scale element (1) with a filling quantity scale (2) and a marking element (3), which can be adjusted relative to each other, **characterized in that** the scale element (1) and the marking element (3) are detachably connected to each other by magnetic force.

2. Container according to Claim 1, **characterized in that** the scale element (1) is an element which can be rotated about the container (5), **in that** the container is used as a marking element and is provided with a marking (3), and **in that** the scale element (1) is connected magnetically to the container (5).

3. Container according to Claim 1, **characterized in that** the marking element (3) is an element which can be rotated about the container (5), **in that** the container is used as a scale element and is provided with a filling quantity scale (2), and **in that** the marking element (3) is connected magnetically to the container (5).

4. Container according to Claim 2 or 3, **characterized in that** the container (5) and the rotatable element are each provided with a magnet of suitable polarity, or **in that** the container (5) is provided with a magnet and the rotatable element consists of magnetic material or is provided with magnetic material, or **in that** the container (5) is provided with magnetic material and the rotatable element is provided with a magnet or consists of a magnet.

5. Container according to Claim 1, **characterized in that** the scale element (1) is a resilient element which can be clamped firmly to the container (5), and **in that** the marking element (3) can be displaced along the scale element (1).

6. Container according to Claim 1, **characterized in that** the scale element has a metal strip or foil which is stuck to the container and which is provided with a filling quantity scale, and **in that** the marking element consists of a magnet or is provided with a magnet.

7. Container according to Claim 1, **characterized in that** the scale element has a magnetic strip or foil which is stuck to the container and which is provided with a filling quantity scale, and **in that** the marking element consists of magnetic material or a magnet or is provided with magnetic material or a magnet.

8. Container according to one of the preceding claims, **characterized in that** the scale element or the marking element consists of a plastic, and **in that** at least one magnet is surrounded by plastic.

9. Container according to one of the preceding claims, **characterized in that** the scale element and/or marking element is provided with an iron magnetic return path disc.

10. Container according to Claim 9, **characterized in that** the scale element or the marking element consists of a plastic, and **in that** the iron magnetic return path disc is surrounded by plastic.

11. Container according to one of the preceding claims, **characterized in that** the scale element (1) and the associated marking element (3) are provided with mutually coordinated profiles.

12. Container according to one of the preceding claims, **characterized in that** the scale element (1) and the marking element (3) are detachably connected mechanically to each other.

13. Container according to one of the preceding claims, **characterized in that** the scale element (1) has a bead and the marking element (3) has a groove or vice versa, in such a way that the bead can snap into the groove.

14. Container according to one of the preceding claims, **characterized in that** the frictional surface between the scale element (1) and the marking element (3) is formed in such a way that they can be adjusted step by step relative to each other.

15. Container according to one of the preceding claims, **characterized in that** the container has a filling quantity scale (4).

## Revendications

1. Récipient (5) doté d'un dispositif d'affichage de son contenu, lequel contenu peut être plus grand que la capacité du récipient, dans lequel le dispositif présente un élément à échelle (1) qui présente une échelle de contenu (2) et un élément de repérage (3) qui peuvent être déplacés l'un par rapport à l'autre,
**caractérisé en ce que** l'élément à échelle (1) et l'élément de repérage (3) sont reliés l'un à l'autre de manière libérable par une force magnétique.

2. Récipient selon la revendication 1, **caractérisé en ce que** l'élément à échelle (1) est un élément qui peut tourner autour du récipient (5), **en ce que** le récipient sert d'élément de repérage et est doté d'un repère (3) et **en ce que** l'élément à échelle (1) est relié magnétiquement au récipient (5).

3. Récipient selon la revendication 1, **caractérisé en ce que** l'élément de repérage (3) est un élément qui peut tourner autour du récipient (5), **en ce que** le récipient sert d'élément à échelle et est doté d'une échelle (2) de contenu, et **en ce que** l'élément de repérage (3) est relié magnétiquement au récipient (5).

4. Récipient selon les revendications 2 ou 3, **caractérisé en ce que** le récipient (5) et l'élément tournant sont dotés tous deux d'un aimant de polarité appropriée, **en ce que** le récipient (5) est doté d'un aimant et l'élément tournant est constitué d'un matériau magnétique ou est doté d'un matériau magnétique, ou **en ce que** le récipient (5) est doté d'un matériau magnétique et l'élément tourné est doté d'un aimant ou est constitué d'un aimant.

5. Récipient selon la revendication 1, **caractérisé en ce que** l'élément à échelle (1) est un élément élastique qui peut être serré sur le récipient (5) et **en ce que** l'élément de repérage (3) peut coulisser le long de l'élément à échelle (1).

6. Récipient selon la revendication 1, **caractérisé en ce que** l'élément à échelle présente un ruban ou une feuille métallique collés sur le récipient et dotés d'une échelle de contenu et **en ce que** l'élément de repérage est constitué d'un aimant ou est doté d'un aimant.

7. Récipient selon la revendication 1, **caractérisé en ce que** l'élément à échelle présente un ruban ou une feuille magnétique collés sur le récipient et dotés d'une échelle de contenu et **en ce que** l'élément de repérage est constitué d'un matériau magnétique ou d'un aimant ou est doté d'un matériau magnétique ou d'un aimant.

8. Récipient selon l'une des revendications précédentes, **caractérisé en ce que** l'élément à échelle ou l'élément de repérage sont réalisés en une matière synthétique et **en ce qu'**au moins un aimant est entouré par la matière synthétique.

9. Récipient selon l'une des revendications précédentes, **caractérisé en ce que** l'élément à échelle et/ou l'élément de repérage sont dotés d'une plaque de blindage en fer.

10. Récipient selon la revendication 9, **caractérisé en ce que** l'élément à échelle ou l'élément de repérage sont constitués d'une matière synthétique et **en ce que** la plaque de blindage en fer est entourée par la matière synthétique.

11. Récipient selon l'une des revendications précédentes, **caractérisé en ce que** l'élément à échelle (1) et l'élément de repérage (3) qui y est associé sont dotés de profils accordés l'un à l'autre.

12. Récipient selon l'une des revendications précédentes, **caractérisé en ce que** l'élément à échelle (1) et l'élément de repérage (3) sont reliés mécaniquement l'un à l'autre de manière libérable.

13. Récipient selon l'une des revendications précédentes, **caractérisé en ce que** l'élément à échelle (1) présente un bourrelet et **en ce que** l'élément de repérage (3) présente une rainure, ou l'inverse, de telle sorte que le bourrelet puisse s'engager élastiquement dans la rainure.

14. Récipient selon l'une des revendications précédentes, **caractérisé en ce que** la surface de frottement entre l'élément à échelle (1) et l'élément de repérage (3) est configurée de telle sorte qu'ils puissent être ajustés par pas l'un par rapport à l'autre.

15. Récipient selon l'une des revendications précédentes, **caractérisé en ce que** le récipient présente une échelle de contenu (4).
